# EUROPEAN PATENT SPECIFICATION

(11) **EP 2 551 321 B1**
(45) Date of publication and mention of the grant of the patent: **15.07.2020**
(21) Application number: 11759502.5
(22) Date of filing: 24.03.2011
(51) Int. Cl.: C09J 163/00, C09J 4/02, C09J 11/06, C08G 59/68, C08G 59/44

(54) **CURING AGENT COMPOSITION FOR EPOXY RESIN BASED ADHESIVE, AND ADHESIVE FOR POROUS MATERIALS**
HÄRTUNGSMITTELZUSAMMENSETZUNG FÜR EIN HAFTMITTEL AUF EPOXIDHARZBASIS SOWIE HAFTMITTEL FÜR PORÖSE MATERIALIEN
COMPOSITION DE DURCISSEUR POUR ADHÉSIF À BASE DE RÉSINE ÉPOXY, ET ADHÉSIF POUR MATÉRIAUX POREUX

(30) Priority: 25.03.2010 JP 2010070207
(43) Date of publication of application: 30.01.2013
(73) Proprietor: YAMAHA Corporation, Shizuoka 430-8650 (JP)
(72) Inventor: SUZUKI Katsunori, Hamamatsu-shi Shizuoka 430-8650 (JP); IWATA Ritsuo, Hamamatsu-shi Shizuoka 432-8012 (JP); AMANO Tetsuya, Hamamatsu-shi Shizuoka 430-8650 (JP); OGATA Tomohide, Hamamatsu-shi Shizuoka 430-8650 (JP)
(74) Representative: Wagner, Karl H.
(86) International application number: PCT/JP2011/057152
(87) International publication number: WO 2011/118697

(56) References cited:
- WO-A1-00/35986
- DE-A1- 4 235 800
- JP-A- 4 206 112
- JP-A- 4 275 383
- JP-A- 4 331 279
- JP-A- 9 165 493
- JP-A- 60 079 029
- JP-A- 2003 194 032
- JP-A- 2007 176 495
- US-A- 3 390 124
- US-A- 4 464 485
- US-A- 5 998 508
- EPOXY RESIN HANDBOOK 1987, pages 167 - 177, XP008171243

## Description

### TECHNICAL FIELD

The present invention relates to adhesives for adhesion of porous materials such as fibrous materials such as woody materials and cloth, inorganic materials and organic materials such as resin foams.

### BACKGROUND ART

Recently, water-based adhesives not including plenty of organic solvent have been widely used in consideration of environmental improvements in manufacturing plants and working sites. As water-based adhesives, for example, water-based phenol-resin adhesives (see JP 2006-257273 A) with principal components of resole phenol resins, water-based polymer-isocyanate adhesives (see JP 2007-262139 A) made of polyvinyl alcohol and isocyanate, and water-based epoxy-resin adhesives (see JP 2008-247958 A) made of epoxy-resin emulsion and curing agents are conventionally known.

However, there is a tendency to avoid the usage of water-based phenol-resin adhesives including formaldehyde as they are subjected to strict emission regulations.

Water-based polymer-isocyanate adhesives may generate gas due to crosslinking and blistering by themselves; hence, they may undergo low adhesive strengths depending on clamping conditions between adherends. Additionally, they suffer from a short pot life, high viscosity, and low coating workability.

Water-based epoxy-resin adhesives may not cause adhesion in a short period of time, and therefore they may not produce adequate adhesive strengths (i.e. adhesive shear strength in standard atmosphere, adhesive shear strength of temperature-resistance, and adhesive shear strength of water-resistance). Additionally, it is difficult to achieve molecular-level mixing between an epoxy-resin emulsion, having a large particle diameter, and a curing agent; hence, adhesiveness tends to be inadequate. This has led to an idea not to emulsionize an epoxy resin so as to reduce its particle diameter; however, a curing agent should be mixed with water because an epoxy resin cannot be mixed with water. Even though an amine curing agent is adopted as a curing agent of an epoxy resin, it is impossible to obtain an adequate adhesive strength because an amine agent is prone to be inactivated with water.

US 4,464,485 A discloses a method of producing a porous material having open pores, comprising the steps of preparing a slurry from a mixture comprising a bisphenol-type epoxy resin, a specific mixture amide compound as a hardener, a filler and water, casting the slurry in a water-impermeable mold, hardening the slurry while it contains the water and dehydrating the hardened body.

DE 42 35 800 A1 discloses a coating material which comprises a base component and a hardener. The base component contains polyaminoamide and is preferably mixed with a solvent dilutable first component or a water dilutable second component forming the hardener. The solvent dilutable first component is a liquid resin of biphenol and glycidyl ether, and the water dilutable second component is an emulsifiable resin with a maximum epoxy number of 8. The coating material is useful for coating steel structures, mass produced goods, motor vehicles and containers. the coating material is water based and may be used at low temperatures (less than 15 °C) and high humidity (greater than 80%).

US 5,998 508 A discloses a epoxy resin composition containing a) an epoxy resin, b) a liquid amine terminated polyamine curing agent prepared by condensing an aminoalkylpiperazine and a dicarboxylic acid, and (c) water. An aqueous dispersion of the amine terminated polyamine curing agent is useful as a curing agent for water borne applications.

WO 00/35986 A1 discloses an epoxy resin composition containing a) an epoxy resin and b) a liquid amine terminated polyamine curing agent prepared by condensing an aminoalkylpiperazine and a dicarboxylic acid. The epoxy resin composition typically requires less than 35% of solvent to produce a sprayable viscosity. A hydroxy-functional flexibilized resin is also produced by reacting (a) an epoxy resin, (b) a liquid aminoalkylpiperazine-based amine terminated polyamine and (c) a hydroxy-functional amine. Respective thermoset epoxy waterproofing membranes comprise: (a) one or more epoxy resin(s) having an average of at least 1.5 epoxy groups per molecule; (b) a liquid amine terminated polyamine prepared by reacting at least one C18-50 dicarboxylic acid and an aminoalkylpiperazine in a ratio of moles of aminoalkylpiperazine to equivalents of carboxyl group in the acid of greater than 0.75:1; (c) one or more optional polyamine(s); (d) one or more optional filler(s); and (e) one or more optional modifying resin(s) wherein the tensile modulus of the thermoset epoxy waterproofing membranes is less than 200,000 psi and the tensile elongation of the thermoset epoxy waterproofing membranes is greater than 20%. The membranes are useful for preventing water penetration for roofs, bridges, parking decks, water-retention ponds, swimming pool liners, basement water barriers, land fills, secondary containment, geomembranes and ponds.

US 3,390,124 A discloses phenolic polyamines and their use as co-reactants for epoxy resins. The polyamines contain a phenolic nucleus. These compounds react with the epoxide linkages of the epoxy resins. The phenolic nucleus of the polyamine becomes an integral part of the cured epoxy resin.

### SUMMARY OF INVENTION

### TECHNICAL PROBLEM

It is an object of the present invention to provide a curing agent composition for epoxy resin adhesives, which is made of an amine curing agent hardly prone to be activated in the coexistence of water, which can be easily mixed with epoxy resins, and which is able to improve adhesive strengths of epoxy resins.

Additionally, it is an object of the present invention to provide an adhesive for a porous material, which does not include formaldehyde, whose pot life is long, and which is able to produce a high adhesive strength in a short period of time.

In this connection, the adhesive shear strength in standard atmosphere, the adhesive shear strength of temperature-resistance, and the adhesive shear strength of water-resistance are used as indexes of adhesive strengths.

### SOLUTION TO PROBLEM

The present invention provides a curing agent composition for an epoxy resin adhesive as set forth in claim 1.

The present invention also provides an adhesive for a porous material made of a curing agent composition as set forth in claim 3.

The adhesive for a porous material may further include a polyfunctional acrylic oligomer. Additionally, the adhesive for a porous material may further include an organic acid.

### ADVANTAGEOUS EFFECTS OF INVENTION

The curing agent composition for the epoxy resin adhesive according to the present invention is an amine curing agent whose activity is hardly reduced in the coexistence of water and which is easily mixed with an epoxy resin; hence, it is possible to improve an adhesive strength of the epoxy resin adhesive.

The adhesive for a porous material according to the present invention not including formaldehyde indicates a long pot life and produces a high adhesive strength (i.e. adhesive shear strength in standard atmosphere, adhesive shear strength of temperature-resistance, and adhesive shear strength of water-resistance) in a short period of time.

### DESCRIPTION OF EMBODIMENTS

The curing agent composition for the epoxy resin adhesive according to the present invention is used for an adhesive with a principal component of an epoxy resin, and therefore it includes a curing agent and a tertiary amine.

The curing agent includes water and a water-based poly-amino-amide curing agent having both a hydrophilic group and lipophilic group; alternatively, the curing agent may include water and a water-based polyamide curing agent having both a hydrophilic group and lipophilic group.

The water-based poly-amino-amide curing agent and the water-based polyamide curing agent are each provided with an amino group as the hydrophilic group, and a hydrocarbon group or an amino group as the lipophilic group.

In this connection, it is preferable that the solid content concentration of a curing agent range from 38% to 42%.

As the water-based poly-amino-amide curing agent, it is preferable to use a condensate which is produced via a condensation reaction of poly-amino-amide with a dimer acid or trimer acid. As the water-based polyamide curing agent, it is preferable to use a condensate which is produced via a condensation reaction of polyamide with a dimer acid or trimer acid. These condensates, superior in dispersion property with water, may improve the dispersion property of an epoxy resin with water, while they are hardly prone to be inactivated in water.

The poly-amino-amide is expressed with a general formula of R¹-CONH-R²NH₂ (where R¹, R² are arbitrary hydrocarbon groups; R¹ may be identical to R²; alternatively, they may differ from each other), indicating a condensate which is produced using monocarboxylic acid and an amine compound with amino groups at both ends.

As the amino compound with amino groups at both ends, for example, it is possible to name ethylene diamine, tetraethylene diamine, polyethylene polyamine, triethylene tetramine, tetraethylene pentamine, pentaethylene hexamine, isophorone diamine, and metaxylylene diamine. Among amine compounds, aliphatic polyamine has superior curing property, while triethylene tetramine, isophorone diamine, metaxylylene diamine, and their modifications may be preferable in terms of the mechanical property of a curing agent.

The dimer acid is dicarboxylic acid with a carbon number of 36, which is made of unsaturated aliphatic acid with a carbon number of 18 (e.g. oleic acid, linoleic acid). As the dimer acid, it is possible to name an acyclic type, a monocyclic type, a polycyclic type, and an aromatic cyclic type with the structural formula of [Chemical Formula 1].

Additionally, the trimer acid is tricarboxylic acid with a carbon number of 54, which is made of unsaturated aliphatic acid with a carbon number of 18 such as tall oil aliphatic acid.

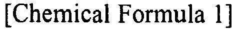

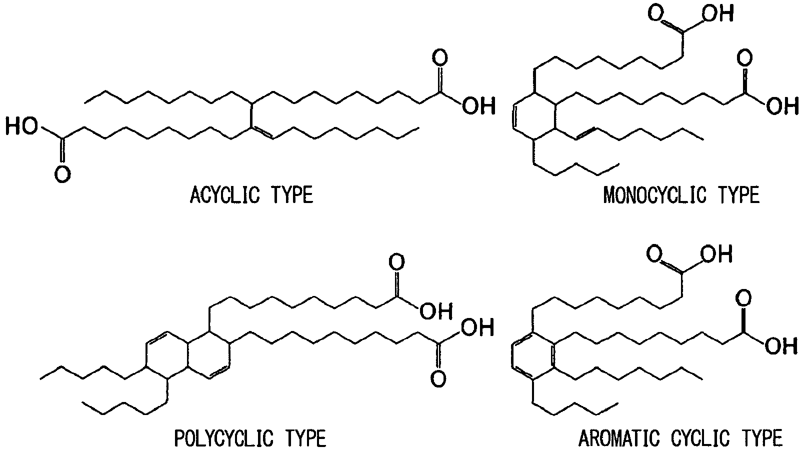

To improve the water content dispersion, the foregoing condensates may include glycidol (2,3-epoxy-1-propanol), epoxidized dicyclopentenyl-alcohol, or an epoxy alcohol compound such as 3,4-epoxy-cyclohexyl-methanol. In this case, the hydroxy group of epoxy alcohol may react with the amino group of a condensate; hence, a condensate including an epoxy alcohol compound should be provided with an epoxy group. Therefore, it is possible to improve the affinity and reactivity with an epoxy resin.

The tertiary amine included in the curing agent composition functions as a curing accelerator. As the tertiary amine, for example, it is possible to name tris (dimethyl-aminomethyl) phenol, dimethylbenzyl-amine, 1,8 diaza-bicyclo (5,4,0) undecane, triethylamine, and triethylenediamine.

It is preferable that the mass ratio between a curing agent and tertiary amine (i.e. curing agent: tertiary amine) range from 175:1 to 50:20. Specifically, it is preferable that the mass ratio range from 150:2 to 50:10, but it is further preferable that the mass ratio range from 125:3 to 80:6. It is preferable that the solid content-scaled mass ratio between a curing agent and tertiary amine (i.e. the solid content-scaled value of curing agent: tertiary amine) range from 70:1 to 1:1. Specifically, it is preferable that the mass ratio range from 30:1 to 2:1, but it is further preferable that this mass ratio range from 50:3 to 32:6. It is possible to produce superior adhesive property as long as the mass ratio between a curing agent and tertiary amine falls within the foregoing ranges.

It is preferable that the mass ratio between the sum of the solid content of a curing agent and tertiary amine, and the curing agent composition range from 21:51 to 90:195. Specifically, it is preferable that the mass ratio range from 22:52 to 70:160, but it is further preferable that the mass ratio range from 35:83 to 56:131.

The concentration of the sum of the solid content of a curing agent and tertiary amine in the curing agent composition may be appropriately selected depending on the mixing method with principal components or the method of applying adhesives, wherein, in consideration of the dispersion property, it is preferable that the concentration be 40 weight-percent or less, but it is further preferable that the concentration be 35 weight-percent or less.

The curing agent included in the foregoing curing agent composition may function as a surface-active agent because it possesses both a hydrophilic group and lipophilic group; hence, the curing agent can be uniformly dispersed in water and may be easily mixed with an epoxy resin. Additionally, the curing agent is hardly prone to be inactivated in the coexistence of water. Moreover, it is possible to improve the curing property of an epoxy resin by use of a curing agent including a tertiary amine. Therefore, it is possible to improve the adhesive strength of the epoxy resin adhesive by use of the foregoing curing agent composition.

The adhesive for a porous material (hereinafter, abbreviated as "adhesive") according to the present invention includes a curing agent composition and a principal component including an epoxy resin. The adhesive of the present invention is a two-pack type in which the principal component and the curing agent composition are mixed together just before the usage.

As to the mixing of the principal component and the curing agent composition, it is preferable that the curing agent composition range from 50 to 200 parts by weight with respect to an epoxy resin of 100 parts by weight. Specifically, it is preferable that the curing agent composition range from 50 to 170 parts by weight with respect to an epoxy resin of 100 parts by weight, but it is further preferable that the curing agent composition range from 80 to 145 parts by weight. Thus, it is possible to improve the adhesive shear strength as long as the curing agent composition has 50 parts by weight or more and 200 parts by weight or less with respect to an epoxy resin of 100 parts by weight; hence, it is possible to easily produce an adhesive shear strength of 5 MPa or more.

As an epoxy resin, for example, it is possible to name a glycidyl-ether epoxy resin, a glycidyl-ester epoxy resin, and a glycidyl-amine epoxy resin.

As the glycidyl-ether epoxy resin, for example, it is possible to name a bisphenol-A epoxy resin, a bisphenol-F epoxy resin, a hydrogenated bisphenol-A epoxy resin, a biphenyl epoxy resin, a naphthalene epoxy resin, a phenolic-novolac epoxy resin, an ortho-cresol epoxy resin, and a bisphenol-A novolac epoxy resin.

As the glycidyl-ester epoxy resin, for example, it is possible to name a hexahydro-phthalic-anhydride epoxy resin, a tetrahydro-phthalic-anhydride epoxy resin, and a dimer-acid epoxy resin.

As the glycidyl-amine epoxy resin, for example, it is possible to name tetraglycidyl-diamino-diphenylmethane, triglycidyl-isocyanurate, an aminophenol epoxy resin, and an aniline epoxy resin.

To adjust the physical property and the adhesiveness, it is possible to change an epoxy resin with a modified epoxy resin. For example, it is possible to use a rubber-modified epoxy resin or a urethane-modified epoxy resin. Additionally, it is possible to use a polyfunctional epoxy resin. Alternatively, it is possible to disperse rubber in an epoxy resin.

To improve the reactivity and the heat-resistant property of an adhesive film, it is preferable that the adhesive include polyfunctional acrylic oligomer.

As the polyfunctional acrylic oligomer, it is possible to name trimethylolpropane-triacrylate, isocyanurate-ethylene-oxide-modified diacrylate, isocyanurate-ethylene-oxide-triacrylate, pentaerythritol-triacrylate, pentaerythritol-tetraacrylate, dipentaerythritol-pentaacrylate, and pentaerythritol-hexaacrylate.

It is preferable that the content of the polyfunctional acrylic oligomer range from 0 to 100 parts by weight with respect to an epoxy resin of 100 parts by weight, but it is further preferable that the content of the polyfunctional acrylic oligomer range from 0.1 to 5 parts by weight. It is possible to prevent the adhesive shear strength from being degraded as long as the content of polyfunctional acrylic oligomer is 10 parts by weight or less with respect to an epoxy resin of 100 parts by weight; hence, it is possible to easily produce an adhesive shear strength of 5 MPa or more. It is possible to further improve the heat-resistant property as long as the content of polyfunctional acrylic oligomer is 0.1 parts by weight or more with respect to an epoxy resin of 100 parts by weight.

The adhesive may include organic acid to adjust its pot life. Herein, it is possible to use a water-soluble organic acid, for example, wherein it is possible to name citric acid, malonic acid, acetic acid, lactic acid, and formic acid.

It is preferable that the content of the organic acid range from 0 to 15 parts by weight with respect to an epoxy resin of 100 parts by weight, but it is further preferable that the content of the organic acid range from 1 to 10 parts by weight. It is possible to prevent the curing time from becoming long as long as the content of the organic acid is 15 parts by weight or less with respect to an epoxy resin of 100 parts by weight, and therefore it is possible to prevent a reduction of product productivity due to adhesion of porous materials via the adhesive including the organic acid. It is possible to increase the pot life of the adhesive including organic acid as long as the content of organic acid is 1 parts by weight or more with respect to an epoxy resin of 100 parts by weight.

The adhesive may include fillers for the purpose of increasing quantity, improving coating workability, filling gaps on coated surfaces, and adjusting strength and viscosity.

As fillers, it is possible to use either inorganic fillers or organic fillers. As inorganic fillers, for example, it is possible to name calcium carbonate, talc, silica, alumina, kaolin, clay, zeolite, bentonite, and aerogel. As organic fillers, for example, it is possible to name wood flour, walnut flour, wheat flour, rice flour, rice chaff, bark flour, coconut, organic fibers such as cellulose fibers, natural fibers, and charcoal flour. Among them, it is preferable to use wood flour or calcium carbonate in consideration of versatility.

It is preferable that the content of fillers range from 50 to 200 parts by weight with respect to an epoxy resin of 100, but it is further preferable that the content of fillers range from 100 to 150 parts by weight. It is possible to prevent a reduction of adhesiveness as long as the content of fillers is 150 parts by weight or less.

When spray-coating is adopted, for example, it is preferable not to include fillers undergoing a risk of reducing a coating ability.

For the purpose of adjusting viscosity, the adhesive may be further loaded with water. It is preferable that the added amount of water range from 0 to 200 parts by weight with respect to an epoxy resin of 100 parts by weight, but it is further preferable that the added amount of water range from 30 to 100 parts by weight. It is possible to prevent dripping due to an excessively reduced viscosity as long as the water content is 200 parts by weight or less with respect to an epoxy resin of 100 parts by weight, while it is possible to further reduce viscosity and thereby improve coating workability as long as the water content is 30 parts by weight or more.

The adhesive may be loaded with a water-soluble organic solvent in addition to water. As the water-soluble organic solvent, for example, it is possible to name methanol, ethanol, propanol, acetone, methyl-ethyl ketone, dimethyl ether, and ethylene-glycol-monomethyl ether.

The viscosity of the adhesive mixing the principal component and the curing agent composition can be adequately adjusted depending on the usage method of the adhesive. When roll-coating is carried out to apply the adhesive to a hard porous material, for example, it is preferable that the viscosity of the adhesive range from 1,000 mPa·s to 50,000 mPa·s in terms of the suitability of roll-coating. When spray-coating is carried out to apply the adhesive to a soft porous material, it is preferable that the viscosity of the adhesive range from 30 mPa·s to 1,000 mPa·s in terms of the suitability of spray-coating.

With respect to a high viscosity of the adhesive of 1,000 mPa·s or more, a BM viscometer is used to perform measurement with a No. 4 rotor under conditions of a revolving speed of 25 r.p.m. and 25 °C. With respect to a low viscosity of 1,000 mPa·s or less, a BM viscometer is used to perform measurement with a No. 3 rotor under conditions of a revolving speed of 12 r.p.m. and 25 °C. In this connection, the viscosity of the adhesive can be adjusted depending on water and organic solvent load.

When the adhesive includes a polyfunctional acrylic oligomer, organic acid, fillers, and organic solvents, it is preferable to mix the curing agent composition with them in advance. It is not preferable to mix principal components with a polyfunctional acrylic oligomer, organic acid, fillers, and organic solvents because they react with an epoxy resin so as to shorten the pot life. When the adhesive includes a polyfunctional acrylic oligomer, organic acid, fillers, and organic solvents, it is possible to mix the curing agent composition with them.

The principal component may include components other than an epoxy resin, but it is not preferable to include water in an epoxy resin due to its lipophilic property. Additionally, an epoxy resin exhibiting high reactivity may reduce the adhesiveness while shortening the pot life when reaction progresses before being mixed with the curing agent composition; hence, it is not preferable to include any component which may react with an epoxy resin into the principal component. In this connection, it is possible to name fillers which may hardly react with an epoxy resin.

The adhesive of the present invention is not a phenol resin adhesive, and therefore it may demonstrate adhesion without including formaldehyde.

Additionally, the adhesive of the present invention may have a similar function as a surface-active agent because the water-based polyaminoamide curing agent and the water-based polyamide curing agent have both a hydrophilic group and lipophilic group. For this reason, the adhesive precluding an emulsifying agent allows an epoxy resin to be dispersed into water with high dispersion property; this increases the pot life of the adhesive. For example, it is possible to adjust the pot life of the adhesive to 60 minutes or so at a temperature of 20-30 °C. Since molecules of an epoxy resin are immediately surrounded by a curing agent, they can be easily mixed together at a molecular level, thus achieving a high adhesive strength (i.e. adhesive shear strength in standard atmosphere, adhesive shear strength of temperature-resistance, and adhesive shear strength of water-resistance) in a short period of time. Moreover, the adhesive of the present invention is superior in its coating workability and water washability.

The adhesive of the present invention, which may readily demonstrate an adhesive strength when infiltrated into porous materials, is preferably applicable to the adhesion of porous materials such as woody materials and cloth. It is possible to bond a pair of woody materials via the adhesive; it is possible to bond a pair of cloths via the adhesive; and it is possible to bond woody materials and cloths together.

As woody materials, for example, it is possible to name laminated wood, orthogonal plywood, parallel plywood (laminate veneer lumber, LVL), parallel strand lumber (PSL), board (medium density fiber (MDF)), particle board (PB), oriented strand board (OSB), bagasse board, bamboo board, and straw board. As cloth, it is possible to name woven cloth and felt.

As the coating method of the adhesive, for example, it is possible to name brushing, knifing, spray-coating, roll-coating, knife-coating, and dip-coating.

After coating, the adhesive may be heated and cured; but the adhesive of the present invention can be cured at ambient temperature, and therefore it is applicable to unheated materials as well.

For this reason, the adhesive for a porous material using the adhesive of the present invention is superior in adhesive property (i.e. adhesive shear strength in standard atmosphere, adhesive shear strength of temperature-resistance, and adhesive shear strength of water-resistance).

### First Embodiment

The principal component (A) was prepared by mixing the polyfunctional acrylic oligomer and the epoxy resin shown in Table 1. Additionally, the curing agent composition (B) is prepared by hydrogenating and mixing a water-based polyaminoamide curing agent (solution, solid content concentration of 40 weight-percent), the tertiary amine, the calcium carbonate, and the organic acid shown in Table 1.

Next, the principal component (A) and the curing agent composition (B) are further mixed together so as to produce a liquid-state adhesive.

**[Table 1]**

| | | |
|---|---|---|
| Epoxy Resin | EP-828 | 70 Parts by Weight |
| | Produced by Japan Epoxy Resin Co. Ltd. | |
| | EP-834 | 20 Parts by Weight |
| | Produced by Japan Epoxy Resin Co. Ltd. | |
| | EP-1001 | 10 Parts by Weight |
| | Produced by Japan Epoxy Resin Co. Ltd. | |
| Curing Agent | Water-Based Polyaminoamide Curing Agent | 70 Parts by Weight |
| | TXH-694 Produced by Fuji Kasei Co., Ltd. | |
| Tertiary Amine | DMP-30 Tris (Dimethylaminomethyl) Phenol | 7 Parts by Weight |
| | Produced by Japan Epoxy Resin Co. Ltd. | |
| Polyfunctional Acrylic Oligomer | M-405 Produced by Toagosei Co. Ltd. | 1 Parts by Weight |
| Organic Acid | Acetic Acid | 1 Parts by Weight |
| Filler | Calcium Carbonate (Particle Diameter 1-30 µm) | 150 Parts by Weight |
| Water | | 100 Parts by Weight |

### Second Embodiment

As shown in Table 2, the principal component made of the epoxy resin was mixed with a curing agent composition including a water-based polyaminoamide curing agent (solution, solid content concentration 40 weight-percent), tertiary amine, polyfunctional acrylic oligomer, and water, thus producing a liquid-state adhesive.

**[Table 2]**

| | | |
|---|---|---|
| Epoxy Resin | EP-828 | 100 Parts by Weight |
| | Produced by Japan Epoxy Resin Co. Ltd. | |
| Curing Agent | Water-Based Polyaminoamide Adhesive | 70 Parts by Weight |
| | TXH-694 | |
| | Produced by Fuji Kasei Co., Ltd. | |
| Tertiary Amine | DMP-30 Tris (Dimethylaminomethyl) Phenol | 7 Parts by Weight |
| | Produced by Japan Epoxy Resin Co. Ltd. | |
| Polyfunctional Acrylic Oligomer | M-405 | 1 Parts by Weight |
| | Produced by Toagosei Co., Ltd. | |
| Water | | 50 Parts by Weight |

### Third Embodiment

The liquid-state adhesive was produced in a similar manner to the first embodiment except that the principal component precludes a polyfunctional acrylic oligomer.

As a first comparative example, a liquid-state adhesive was produced by mixing an epoxy resin emulsion (W2801) at 100 parts by weight, produced by Japan Epoxy Resin Co. Ltd., with a modified aliphatic polyamine adhesive (JER Cure 8060 produced by Japan Epoxy Resin Co. Ltd.) at 100 parts by weight.

The adhesive shear strength in standard atmosphere, the adhesive shear strength of temperature-resistance, and the adhesive shear strength of water-resistance were measured with respect to the adhesion of two birch materials (2 ply, 100mm×100mm, 10 mm thickness) via the adhesive according to the first embodiment, the second embodiment, and the first comparative example. Table 3 shows the measurement results.

| | First Embodiment | Second Embodiment | First Comparative Example |
|---|---|---|---|
| Adhesive Shear Strength In Standard Atmosphere (MPa) | 14.5 | 13.0 | 7.0 |
| Adhesive Shear Strength Of Temperature-Resistance (MPa) | 8.5 | 8.6 | 4.5 |
| Adhesive Shear Strength Of Water-Resistance (MPa) | 10.5 | 8.1 | 6.1 |

As the adhesive shear strength in standard atmosphere, the adhesive strength of the object in a compressed state is measured according to JIS K6852 (ISO6238). Table 3 shows an average value among five measured values.

As the adhesive shear strength of temperature-resistance, the adhesive strength of the object after being left in the environment of 100 °C was measured according to JIS K6831 (ISO19212). Table 3 shows an average value among five measured values.

As the adhesive shear strength of water-resistance, the adhesive strength of the object after soaked in hot water at 60 °C for three hours was measured according to JIS K6857. Table 3 shows an average value among five measured values.

In this connection, the first embodiment and the second embodiment were measured in adhesive conditions, i.e. the temperature of 100 °C, the adhesive time of 10 minutes, and the clamping pressure of 0.1 MPa. The first comparative example did not exhibit adhesion under the same conditions as the first and second embodiments; hence, the first comparative example was measured in other conditions, i.e. the temperature of 100 °C, and the adhesive time of 60 minutes.

The higher shear strength may lead to the superior durability, whereas the adhesive shear strength of 5 MPa or less may lead to poor serviceability.

Compared to the adhesive of the first comparative example, both the adhesives of the first and second embodiments exhibit superiority in terms of the adhesive shear strength in standard atmosphere, the adhesive shear strength of temperature-resistance, and the adhesive shear strength of water-resistance irrespective of a short adhesive time.

The pot life (i.e. the time until the viscosity of the adhesive reaches 20,000 mPa·s after the measurement start time at which the adhesive was just produced) of the first embodiment was measured to be about 60 minutes, whilst the pot life of the adhesive of the first comparative example was 30 minutes or less.

A durability test according to the delamination resistant grade 3-A2 was carried out on laminated beech (three ply, pure beech, 150 mm width, 300 mm height, 30 mm thickness) using the adhesive of the first embodiment, thus producing a good result in which the total adhesive delaminating length percent is less than 10%.

Two birches (two ply, 300mm×300mm, 10 mm thickness) were subjected to roll-coating using the adhesive of the first or second embodiment and then bonded together in conditions of a temperature of 100 °C, adhesive time of 10 minutes, and clamping pressure of 1 MPa; thereafter, they are cut into pieces of 75mm×75mm and then subjected to a dip delamination test regarding the type-two JAS normal plywood. They passed the primary testing because the adhesive delaminating length percent thereof is 0%.

A felt was subjected to spray-coating using the adhesive of the second embodiment, crimped with another felt, and then heated to cure the adhesive. Thereafter, a force in a delaminating direction was applied to these felts, the materials of which were thus destroyed. This proves firm adhesion.

The adhesive of the second embodiment is identical to the adhesive of the first embodiment in terms of adhesive strength, but the pot life thereof is two hours.

### INDUSTRIAL APPLICABILITY

The present invention provides an adhesive preferably applicable to porous materials such as fibrous materials and resin foam materials, and also provides a curing agent composition improving an adhesion of an epoxy resin adhesive. Additionally, the present invention differs from a water-based phenol resin adhesive because it does not include formaldehyde, which is subjected to strict emission regulations, while exhibiting a long pot life and high adhesion in a short period of time; hence, the adhesive of the present invention is applicable to the adhesion of various workpieces and materials in addition to industrial products.

## Claims

1. A curing agent composition for an epoxy resin adhesive, including:
a water-based polyaminoamide curing agent including both a hydrophilic group and lipophilic group, wherein the water-based polyaminoamide curing agent is provided with an amino group as the hydrophilic group, and a hydrocarbon group as the lipophilic group;
a tertiary amine selected from among tris (dimethyl-aminomethyl) phenol, dimethylbenzyl-amine, 1,8 diaza-bicyclo (5,4,0) undecane, trimethylamine, and triethylenediamine; and
water.

2. The curing agent composition for the epoxy resin adhesive according to claim 1, wherein the water-based polyaminoamide curing agent is a condensation product obtained by the condensation reaction using dimer acid or trimer acid with polyaminoamide.

3. An adhesive for a porous material, comprising
a principal component including an epoxy resin; and
a curing agent composition including a water-based polyaminoamide curing agent including both a hydrophilic group and lipophilic group, wherein the water-based polyaminoamide curing agent is provided with an amino group as the hydrophilic group, and a hydrocarbon group as the lipophilic group;
a tertiary amine selected from among tris (dimethyl-aminomethyl) phenol, dimethylbenzyl-amine, 1,8 diaza-bicyclo (5,4,0) undecane, trimethylamine, and triethylenediamine; and
water.

4. The adhesive for a porous material according to claim 3, further including a polyfunctional acrylic oligomer.

5. The adhesive for a porous material according to claim 3, further including an organic acid.

## Patentansprüche

1. Aushärtungsmittelzusammensetzung für einen Epoxidharzklebstoff, die Folgendes aufweist:
ein wasserbasiertes Polyaminoamid-Aushärtungsmittel, welches sowohl eine hydrophile Gruppe als auch eine lipophile Gruppe aufweist, wobei das wasserbasierte Polyaminoamid-Aushärtungsmittel mit einer Aminogruppe als der hydrophilen Gruppe und einer Kohlenwasserstoffgruppe als lipophile Gruppe versehen ist;
ein tertiäres Amin, welche ausgewählt ist aus Tris(dimethyl-aminomethyl)phenol, Dimethylbenzylamin, 1,8 Diazabicyclo (5,4,0)undekan, Trimethylamin und Triethylendiamin; und
Wasser.

2. Aushärtungsmittelzusammensetzung für den Epoxidharzklebstoff nach Anspruch 1, wobei das wasserbasierte Polyaminoamid-Aushärtungsmittel ein Kondensationsprodukt ist, welches durch die Kondensationsreaktion unter Verwendung von Dimersäure oder Trimersäure mit Polyaminoamid erhalten wurde.

3. Klebstoff für ein poröses Material, der Folgendes aufweist:
eine Hauptkomponente, die ein Epoxidharz aufweist, und
eine Aushärtungsmittelzusammensetzung, welche ein wasserbasiertes Polyaminoamid-Aushärtungsmittel aufweist, welches sowohl eine hydrophile Gruppe als auch eine lipophile Gruppe aufweist, wobei das wasserbasierte Polyaminoamid-Aushärtungsmittel mit einer Aminogruppe als hydrophile Gruppe und einer Kohlenwasserstoffgruppe als lipophile Gruppe vorgesehen ist;
ein tertiäres Amin, welche ausgewählt ist aus Tris(dimethyl-aminomethyl)phenol, Dimethylbenzylamin, 1,8 Diazabicyclo(5,4,0)un-dekan, Trimethylamin und Triethylendiamin; und
Wasser.

4. Klebstoff für ein poröses Material nach Anspruch 3, der weiter ein polfunktionales Acryloligomer aufweist.

5. Klebstoff für ein poröses Material nach Anspruch 3, der weiter eine organische Säure aufweist.

## Revendications

1. Composition d'agent de durcissement pour un adhésif à base de résine époxy, comportant :
un agent de durcissement polyaminoamide à base d'eau comportant à la fois un groupe hydrophile et un groupe lipophile, dans lequel l'agent de durcissement polyaminoamide à base d'eau est prévu avec un groupe aminé en tant que le groupe hydrophile, et un groupe hydrocarboné en tant que le groupe lipophile ;
une amine tertiaire sélectionné parmi tris(diméthyl-aminométhyl)phénol, diméthylbenzyl-amine, 1,8-diaza-bicyclo(5,4,0)undécane, triméthylamine, et triéthylénediamine ; et
de l'eau.

2. Composition d'agent de durcissement pour l'adhésif à base de résine époxy selon la revendication 1, dans lequel l'agent de durcissement polyaminoamide à base d'eau est un produit de condensation obtenu par la réaction de condensation utilisant un acide dimère ou un acide trimère avec un polyaminoamide.

3. Adhésif pour un matériau poreux, comprenant
un composant principal comportant une résine époxy ; et
une composition d'agent de durcissement comportant un agent de durcissement polyaminoamide à base d'eau comportant à la fois un groupe hydrophile et un groupe lipophile, dans lequel l'agent de durcissement polyaminoamide à base d'eau est prévu avec un groupe aminé en tant que le groupe hydrophile, et un groupe hydrocarboné en tant que le groupe lipophile ;
une amine tertiaire sélectionnée parmi tris(diméthyl-aminométhyl)phénol, diméthylbenzyl-amine, 1,8-diaza-bicyclo(5,4,0)undécane, triméthylamine, et triéthylénediamine ; et
de l'eau.

4. Adhésif pour un matériau poreux selon la revendication 3, comportant en outre un oligomère acrylique polyfonctionnel.

5. Adhésif pour un matériau poreux selon la revendication 3, comportant en outre un acide organique.
